# EUROPÄISCHE PATENTSCHRIFT

(11) **EP 3 200 299 B1**
(45) Veröffentlichungstag und Bekanntmachung des Hinweises auf die Patenterteilung: **17.10.2018**
(21) Anmeldenummer: 16153538.0
(22) Anmeldetag: 30.01.2016
(51) Int. Cl.: H02G 5/06, H02G 5/00

(54) **STROMSCHIENE UND ENERGIEVERTEILSYSTEM**
BUS BAR AND ENERGY DISTRIBUTION SYSTEM
BARRETTE DE CONNEXION ET SYSTEME DE DISTRIBUTION D'ENERGIE

(43) Veröffentlichungstag der Anmeldung: 02.08.2017
(73) Patentinhaber: Zurecon AG, 9053 Teufen AR (CH)
(72) Erfinder: PFLUGER, Gerd, 4625 Oberbuchsiten (CH)
(74) Vertreter: Rutz & Partner

(56) Entgegenhaltungen:
- EP-A2- 1 928 066
- CH-A2- 709 660
- US-A- 3 015 082
- "GLOBAL SPECIALIST FOR POWER BUSBARS Cast Resin Insulated Busway System", , 27. November 2014 (2014-11-27), XP055191576, Gefunden im Internet: URL:http://www.etacomcs.com/en/brochures-5 .htm [gefunden am 2015-05-26]

## Beschreibung

Die Erfindung betrifft eine Stromschiene und ein Energieverteilsystem mit wenigstens einer solchen Stromschiene.

Stromschienen und deren Verwendung sowie dafür vorgesehene Befestigungsvorrichtungen sind z.B. in [1], Produktkatalog "Niederspannungs-Schienenverteiler LANZ HE 2.5.2" der LANZ OENSINGEN AG vom September 2009 beschrieben.

Stromschienen, die üblicherweise mehrere voneinander getrennte Leitungsstäbe aufweisen, werden zumeist als Elemente von Stammleitungen verwendet, die Energieverteilsysteme mit Energie versorgen. Zur Verbindung der einzelnen Stromschienen und zum Anschluss der Stromschienen an elektrische Vorrichtungen werden Verbindungskupplungen und Anschlusskupplungen bzw. Verbindungsgarnituren, verwendbar, wie sie in [1], Seite 5 beschrieben sind. Durch diese Kupplungen erfolgt eine zuverlässige elektrische und mechanische Verbindung der elektrisch leitfähigen Leitungsstäbe der Stromschienen untereinander oder mit Anschlusskontakten. An den Enden der Stromschienen werden oft Abschlussköpfe vorgesehen, bei denen die einzelnen Leitungsstäbe durch eingegossene Anschlusslaschen kontaktiert sind.

Hinsichtlich der Betriebssicherheit eines Energieverteilnetzes ist zu beachten, dass die Linien, entlang denen die Energie verteilt wird, normalerweise mehrere Elemente umfassen, die miteinander elektrisch verbunden sind. Die Häufigkeit von Stromunterbrüchen und Störungen ist naturgemäss umso geringer, je geringer die Anzahl der Verbindungen bzw. Kontaktstellen innerhalb des Energieverteilnetzes ist. Grundsätzlich wäre es wünschenswert, die Energie unter Vermeidung von Kontaktstellen über durchgehende Leitungen vom Energieversorger zum Energieabnehmer zu übertragen.

Aus [2], E-LINE MK Busbar Systems 100-160-225A, www.eae.com.tr, sind Anschlusskästen bekannt, bei denen Anschlusskontakte von Stromschienen mittels Federkontakten von Steckverbindungen kontaktiert werden. Die Anschlusskästen, die oft in Leitungsschächten zum Einsatz gelangen und grosse "Steckverbinder" bilden, weisen ein Gehäuse auf, in das die Anschlusskabel hineingeführt werden. Beim Öffnen des Gehäusedeckels wird die Verbindung zwischen den Anschlusskabeln und den Leitungsstäben der Stromschiene automatisch unterbrochen. Dazu sind an der Innenseite des Gehäusedeckels Kontaktmesser vorgesehen, die beim Schliessen des Gehäusedeckels in eine Kontaktbox hinein geführt werden. Die Verbindung zwischen den Leitungsstäben der Stromschiene und den von den Anschlusskästen weggeführten Anschlusskabeln erfolgt somit über mehrere seriell geschaltete Kontaktverbindungen.

Hinsichtlich der Betriebsqualität ist dabei nachteilig, dass einerseits mehrere Kontaktverbindungen erforderlich sind, und dass diese Kontaktverbindungen andererseits geringe wirksame Kontaktflächen sowie verschleissanfällig Elemente aufweisen. In diesen Kontaktbereichen kann daher nicht die Verbindungsqualität erreicht werden, welche bei Stromschienen erzielt wird, die durch Verbindungskupplungen miteinander verbunden sind. Ein einheitlicher Sicherheits- und Qualitätsstandard kann zwischen den Anschlusspunkten der gesamten elektrischen Anlage, z.B. zwischen Klemmen eines Leistungsschalters einerseits, und Anschlusspunkten eines Transformators andererseits, somit nicht aufrechterhalten werden. Damit zudem die Einhaltung der Sicherheitsstandards durch die Anschlusskästen gewährleistet wird, müssen diese entsprechend aufwändig ausgestaltet. Die Qualität der Isolation der Stromschienen kann dabei nicht erreicht werden.

Zu beachten ist, dass das Energieverteilnetz äusseren Einflüssen ausgesetzt ist und dagegen geschützt werden muss. Insbesondere soll das Energieverteilnetz gegen Einwirkungen von Gasen, Feuchtigkeit, Wasser, insbesondere Druckwasser, Chemikalien, Feuer, und mechanische Einwirkungen z.B. gegen Einwirkungen eines Erdbebens geschützt werden. Anschlusskästen, die diesen Bedingungen standhalten sollen, müssen entsprechend aufwendig ausgestaltet werden, wobei sichergestellt werden muss, dass auch nach mehrmaligem Öffnen und Schliessen der Anschlusskasten vollständig abgedichtet ist.

Sofern keine entsprechenden Sicherheitsmassnahmen getroffen wurden, kann ein mit einer Stromschiene verbundener Anschlusskasten zudem demontiert oder geöffnet werden, wenn die Stromschiene unter Strom steht, so dass nicht vernachlässigbare Sicherheitsrisiken resultieren. Es ist daher stets darauf zu achten, dass nur geschulte Installateure Zugriff zu den Anschlusskästen erhalten.

Anschlusskästen sind zudem voluminös und weisen einen weit grösseren Querschnitt auf, als Stromschienen. Anschlusskästen nehmen bei normalerweise bereits kritischen Raumverhältnissen daher relativ viel Raum in Anspruch und treten optisch unvorteilhaft in Erscheinung.

Hinsichtlich des Volumens und des Gewichts der Anschlusskästen sowie unter Berücksichtigung der Tatsache, dass Anschlusskästen oft "über Kopf" montiert werden müssen, erfolgt deren Installation oft nicht in idealer Weise. Dabei ist zu beachten, dass bei fehlerhafter Montage der Anschlusskasten Deformationen der Anschlusskontakte und Kontaktmängel auftreten können.

Energieverteilsysteme mit Stromschienen sind zudem oft unflexibel. Die Erweiterung eines Energieverteilsystems mit dem Anschluss weiterer elektrische Vorrichtungen erfordert regelmässig einen grossen Installationsaufwand. Um geplante Verbindungen innerhalb eines Gebäudes erstellen zu können, werden üblicherweise Stromschienen verwendet, die beim Hersteller konfektionieren werden. Für den Anschluss weiterer Stromabnehmer muss oft eine Stromschiene ersetzt werden.

Der vorliegenden Erfindung liegt die Aufgabe zugrunde, eine verbesserte Stromschiene und ein Energieverteilsystem mit wenigstens einer solchen Stromschiene zu schaffen.

Insbesondere ist eine Stromschiene zu schaffen, mittels der Energieverteilsysteme unter Wahrung eines einheitlich hohen Qualitätsstandards, wie er für die Installation von Stromschienen vorgesehen ist, besonders einfach erstellt werden können.

Mittels erfindungsgemässen Stromschienen sollen komplexe Energieverteilnetze mit geringem Aufwand realisierbar sein. Der Aufwand für Planungsarbeiten und die Konfektionierung von Stromschienen soll anhand der erfindungsgemässen Lösung vermieden oder wesentlich reduziert werden können.

Für die Erstellung aller elektrischen Verbindungen, durch die Stromschienen untereinander oder mit Anschlusskabeln verbunden werden, sollen elektrische Verbindungselemente verwendet werden können, die belastbar und verschleissfrei sind und bei denen grosse wirksame Kontaktflächen resultieren.

Ferner sollen spätere Modifikationen und Erweiterungen eines Energieverteilnetzes mit minimalem Aufwand und unter Wahrung des hohen Sicherheitsstandards der Stromschienen möglich sein.

Der Aufwand und die Kosten für die Herstellung, Installation und Wartung der Stromschienen und des resultierenden Energieverteilsystem sollen wesentlich reduziert werden können.

Anschlussvorrichtungen beliebiger Art sollen in einfacher Weise stabil mit der Stromschiene verbindbar sein.

CH 709 660 A2 offenbart den Oberbegriff des Anspruchs 1.

US 3 015 082 offenbart einen vorgefertigten Anschlussbereich mit ausbrechbarer Abdeckung für einen Steckverbindung eines nicht eingegossenen Sammelschienensystems.

Diese Aufgabe wird mit einer Stromschiene und einem Energieverteilsystem gelöst, welche die in Anspruch 1 bzw. 10 angegebenen Merkmale aufweisen. Vorteilhafte Ausgestaltungen der Erfindung sind in weiteren Ansprüchen angegeben.

Die Stromschiene umfasst mehrere elektrisch leitfähige Leitungsstäbe, die getrennt voneinander von einem ersten Anschlussbereich an einem Ende der Stromschiene zu einem zweiten Anschlussbereich am anderen Ende der Stromschiene geführt und in einem ersten Isolationskörper aus einem ersten Isolationsmaterial, wie Giessharz oder Polymerbeton, eingegossen sind.

Erfindungsgemäss ist zur optionalen Ankopplung einer Anschlussvorrichtung oder eines Energieversorgungssystems oder Teilen davon zwischen dem ersten und dem zweiten Anschlussbereich der Stromschiene wenigstens ein dritter Anschlussbereich vorgesehen, innerhalb dessen der erste Isolationskörper zumindest teilweise unterbrochen ist oder eine Ausnehmung aufweist und durch den zumindest ein Teil der Leitungsstäbe hindurch geführt ist, die im dritten Anschlussbereich von einem lösbaren zweiten Isolationskörper zumindest teilweise umschlossen sind, der aus einem zweiten Isolationsmaterial besteht, dessen Festigkeit sich von der Festigkeit des ersten Isolationsmaterials unterscheidet.

Aufgrund der Beschaffenheit des zweiten Isolationsmaterials kann der zweite Isolationskörper bei Bedarf von der Stromschiene gelöst werden. Die Leitungsstäbe können im dritten Anschlussbereich daher teilweise oder vollständig freigelegt und mit Leitungsstäben einer weiteren Stromschiene, die z.B. aus Anschlussschiene dient, mit einem Leistungsschalter, mit Anschlusskontakten eines Kabels und sogar mit einem Anschlusskasten verbunden werden, der deutlich reduzierte Dimensionen aufweisen kann.

Der dritte Anschlussbereich kann beliebig ausgestaltet und an die zu verbindende Anschlussvorrichtung angepasst sein. Z.B. wird vorgesehen, dass die Anschlussvorrichtung teilweise innerhalb des ersten Isolationskörpers aufgenommen wird. Der dritte Anschlussbereich kann z.B. durch eine Zugangsöffnung oder Ausnehmung an einer, mehreren oder allen Seiten des ersten Isolationskörpers gebildet werden. Dabei können Seitenstücke und/oder Eckstücke aus dem ersten Isolationskörper ausgenommen sein. Beim Vergiessen der Ankopplungsschienen werden vorzugsweise Formteile eingesetzt, die der gewünschten Form des Anschlussbereichs entsprechen. Dabei können auch zwei oder mehrere Formteile eingesetzt werden, die gegebenenfalls miteinander verbunden sind.

Zur Verbindung des dritten Anschlussbereichs mit einer Anschlussvorrichtung z.B. einer weiteren Stromschiene oder Anschlusskontakten eines Kabels können dieselben Kopplungsvorrichtungen oder Anschlussgarnituren verwendet werden, die für die anderen Anschlussbereiche an den Enden der Stromschiene verwendet werden. Die Verbindungsqualität ist daher an allen drei Anschlussbereichen jeder Stromschiene gleich hoch. Die Verbindungen sind vorzugsweise geschraubt.

Ferner sind auch Steckverbindungen und Klemmverbindungen realisierbar. Insbesondere für die Verbindung mit Anschlussvorrichtungen, die in einem tieferen Strombereich von z.B. weniger als 100 A arbeiten, können Steckverbindungen und Klemmverbindungen vorgesehen werden, die vorzugsweise grosse Kontaktflächen aufweisen.

Anschlusskästen und Leistungsschalter können daher teilweise in die Ankopplungsschienen integriert werden. In vorzugsweisen Ausgestaltungen kann der erste Isolationskörper im dritten Anschlussbereich auch grössere Dimensionen aufweisen, sodass eine formschlüssige Verbindung zwischen dem ersten Isolationskörper und der Anschlussvorrichtung realisierbar ist.

Die erfindungsgemässe Stromschiene, nachstehend auch Ankopplungsschiene genannt, erlaubt es somit, ein wahlweise verzweigtes Energieverteilsystem aufzubauen, welches über den gesamten Bereich eine einheitlich hohe Verbindungsqualität aufweist und mit geringem Aufwand und erweitert werden kann. Das erfindungsgemässe Energieverteilsystem erlaubt die Verbindung von Anschlussvorrichtungen praktisch an beliebigen Stellen des Energieverteilsystems, sodass dieses flexibel ausgebaut und an die geänderte Infrastruktur des Anwenders angepasst werden kann.

In bevorzugten Ausgestaltungen sind die Leitungsstäbe der Ankopplungsschiene in einen mehrteiligen ersten Isolationskörper eingegossen, der aus Giessharz oder Epoxyzement bzw. Polymerbeton gefertigt ist. In dieser Ausgestaltung sind die Ankopplungsschienen auf Erdbebensicherheit, Schocksicherheit und Funktionserhalt im Brandfall ausgelegt. D.h., weder mechanische, thermische oder chemische Einwirkungen, insbesondere auch kein Druckwasser, können die Betriebssicherheit der Ankopplungsschienen gefährden. Durch den im wenigstens einen dritten Anschlussbereich vorgesehenen zweiten Isolationskörper sind die Leitungsstäbe ebenfalls dicht abschliessend eingegossen. Der zweite Isolationskörper ist dabei derart ausgestaltet, dass er dicht abschliesst, aber trotzdem bedarfsweise entfernt werden kann, um eine weitere Stromschiene oder ein Anschlusskabel an die Leitungsstäbe anzuschliessen. Die Leitungsstäbe sind innerhalb des dritten Anschlussbereichs vorzugsweise mit Bohrungen, gegebenenfalls Gewindebohrungen, versehen, in die Verbindungschrauben eingesetzt werden können.

Nach dem Anschluss einer Anschlussschiene oder eines Anschlusskabels wird der dritte Anschlussbereich der Ankopplungsschiene wieder vergossen. Dazu wird ein drittes Isolationsmaterial verwendet, welches vorzugsweise dem ersten oder dem zweiten Isolationsmaterial entspricht.

Mit der erfindungsgemässen Ankopplungsschiene kann der maximale Sicherheitsstandard, insbesondere der Schutzgrad IP68, auch für den wenigstens einen dritten Anschlussbereich unabhängig davon gewährleistet werden, ob der dritte Anschlussbereich bereits genutzt wurde oder nicht. Dieser Schutzgrad IP68 kann somit nicht nur für die einzelne Ankopplungsschiene, sondern für das gesamte Energieverteilsystem sichergestellt werden.

Insbesondere in Steigleitungsbereichen, in denen oft unmittelbar neben den Stromschienen Leitungen für Kaltwasser, Warmwasser, Meteorwasser und Abwasser geführt werden und Rohrbrüche relativ häufig auftreten, können mit den erfindungsgemässen Ankopplungsschienen im Ereignisfall Kurzschlüsse vermieden werden, da der Schutzgrad IP68 konsequent eingehalten wird. Der Anwender kann sich darauf verlassen, dass seine elektrischen Geräte zuverlässig mit Strom versorgt werden, dass das Energieverteilnetz keine Schwachstellen aufweist und dass die höchsten Sicherheitsstandards eingehalten werden. Insbesondere wird der Funktionserhalt im Brandfall auch über die maximal mögliche Dauer gewährleistet.

Auf fehleranfällige Anschlusskästen mit Steckkontakten und Federkontakten wird verzichtet. Ferner ist es nicht notwendig, die ersten beiden Anschlussbereiche der Leitungsstäbe durch zusätzliche elektrische Verbindungen zu belasten. Gewünschte Verbindungen können an passender Stelle durch Nutzung der dritten Anschlussbereiche erstellt werden.

Besonders vorteilhaft ist, dass der dritte Anschlussbereich in die Ankopplungsschiene integriert ist, so dass keine Vergrösserung des Querschnitts der Stromschiene resultiert. Es werden keine Anschlusskästen mit der Stromschiene verbunden, die in den zumeist eng bemessenen Raum im Bereich des Energieverteilnetzes hineinragen und die üblicherweise eine reduzierte Isolationsqualität aufweisen. Der Durchgangskanal, z.B. ein Leitungsschacht, kann daher reduzierte Dimensionen aufweisen.

Vorteilhaft ist auch, dass sich die erfindungsgemässe Ankopplungsschiene von konventionellen Stromschienen nicht erkennbar unterscheidet, wenn die Anschlussschiene oder das Anschlusskabel nicht montiert sind. Das Energieverteilnetz ist daher einheitlich aufgebaut und kann bedarfsweise mit einfachen Massnahmen erweitert werden. Sofern eine weitere Stromschiene an den dritten Anschlussbereich angeschlossen und dieser wieder vergossen wird, so unterscheidet sich die resultierende Stromschiene nicht erkennbar von einer im Werk gefertigten Stromschiene, die eine solche Abzweigung aufweist.

Ferner ist besonders vorteilhaft, dass die Sicherheitsstandards dieser Stromschienen hinsichtlich aller Anschlussbereiche erfüllt werden. Der dritte Anschlussbereich wird ohne Vergrösserung des Querschnitts realisiert und durch die Vergussmasse bzw. das zweite Isolationsmaterial zuverlässig gegen äussere Einflüsse, insbesondere Wassereinflüsse, abgeschirmt.

Der dritte Anschlussbereich kann zudem mit geringen Kosten realisiert werden, so dass Stromschienen auch dann vorteilhaft mit einem dritten Anschlussbereich versehen werden können, wenn eine unmittelbare Nutzung dieses Anschlussbereichs nicht geplant ist. Die Gesamtkosten des installierten Energieverteilnetzes erhöhen sich daher kaum, falls die dritten Anschlussbereiche nicht genutzt werden. Sobald jedoch nur einer oder wenige der dritten Anschlussbereiche genutzt werden, können mit einem erfindungsgemässen Energieverteilernetz wesentliche Einsparungen erzielt werden. Insbesondere erhöht sich auch die Flexibilität des installierten Energieverteilnetzes hinsichtlich späterer Nutzungsänderungen und Nutzungserweiterungen, die mit minimalem Aufwand realisiert werden können.

Z.B. können zusätzliche elektrische Vorrichtungen, wie Datenverarbeitungsanlagen, zu einem späteren Zeitpunkt installiert und angeschlossen werden, ohne dass die durch die Stromschienen gebildete Infrastruktur geändert werden muss. Über Anschlusskabel mit entsprechendem Leiterquerschnitt können kleine oder grosse elektrische Lasten zu einem beliebigen späteren Zeitpunkt nach der Erstinstallation an das Energieverteilnetz angeschlossen werden. An jedem momentanen oder zukünftigen Anschlusspunkt des Energieverteilnetzes wird dabei höchste Anschlussqualität und Versorgungssicherheit gewährleistet.

Sofern entlang eines Energietransportweges hingegen mehrere elektrische Vorrichtungen anzuschliessen sind, ist es nicht notwendig mehrere kurze Stromschienen entsprechend zu konfektionieren. Stattdessen kann eine längere Stromschiene vorgesehen werden, die zwischen den ersten beiden endseitigen Anschlussbereichen einen oder mehrere dritte Anschlussbereiche aufweist, die auf gleichen oder unterschiedlichen Seiten, unten, oben, links oder rechts an der erfindungsgemässen Stromschiene vorgesehen sind. Auf diese Weise sind mit minimalem Aufwand mit einer einzigen Stromschiene mehrere elektrische Vorrichtungen über kürzest mögliche Anschlussleitungen anschliessbar.

Zu berücksichtigen sind ferner die Raumersparnisse beim Bauwerk, insbesondere die Möglichkeit einen erforderlichen Leitungsschacht mit reduzierten Abmessungen zu realisieren.

In einer vorzugsweisen Ausgestaltung ist das zweite Isolationsmaterial eine aus einer oder mehreren Komponenten bestehende organische oder anorganische Masse, die sich nach der Anwendung selbsttätig oder vorzugsweise unter Zufuhr von Wärme oder eines Reaktanten oder Katalysators verfestigt.

Vorzugsweise weist das zweite Isolationsmaterial eine gute Wärmeleitfähigkeit auf, die vorzugsweise zumindest annähernd derjenigen des ersten Isolationsmaterials entspricht. Auf diese Weise wird eine gleichmässige Wärmeverteilung erzielt, wodurch Materialspannungen vermieden werden.

Der zweite Isolationskörper kann daher in einfacher Weise gefertigt werden, indem das zweite Isolationsmaterial z.B. in eine Form eingeführt wird, die vorzugsweise an den Querschnitt der Stromschiene angepasst ist. Die Oberflächen der Teile des ersten und des zweiten Isolationskörpers liegen daher bündig aneinander. Sofern die Stromschiene zusätzlich eingefärbt wird, sind die Änderungen der Beschaffenheit entlang der Stromschiene nicht erkennbar. Vorzugsweise werden die Stellen markiert, an denen die dritten Anschlussbereiche vorgesehen sind. Z.B. werden Positionen von Sollbruchstellen innerhalb des zweiten Isolationskörpers durch Linien markiert.

Das zweite Isolationsmaterial umfasst vorzugsweise organische Polymere, wie Thermoplaste, Duromere oder Elastomere, oder anorganische Polymere, wie Silikonpolymer, Polysiloxane, Polyphosphazene, Polyphosphazene, Silikonkautschuk oder Polysilazane.

Damit der zweite Isolationskörper zum Zweck der Kontaktierung des dritten Anschlussbereichs leicht entfernt werden kann, wird vorzugsweise ein zweites Isolationsmaterial gewählt, welches nach der Verfestigung weich und gummielastisch oder hart und spröde ist. Der zweite Isolationskörper wird daher derart ausgebildet, dass er durch Schneiden oder durch Schlagwirkung oder mechanische Vibrationen auftrennbar ist.

Sofern das verfestigte zweite Isolationsmaterial weich und gummielastisch ist, kann es aufgeschnitten werden. Sofern das verfestigte zweite Isolationsmaterial hingegen hart und spröde ist, kann es durch Schlageinwirkung, oder durch ein vibrierendes Messer leicht aufgetrennt werden.

Zur Erzielung eines spröden zweiten Isolationskörpers wird vorzugsweise ein zweites Isolationsmaterial verwendet, das vollständig oder teilweise auskristallisiert. Z.B. wird dem zweiten Isolationsmaterial eine Komponente beigemischt, die auskristallisiert. In den auskristallisierten Bereich können durch Schlageinwirkung Risse eingefügt werden, die es erlauben, den zweiten Isolationskörper leicht zu lösen.

Vorzugsweise umfasst der zweite Isolationskörper Fasern oder Gewebe, die vorzugsweise in Lagen in das zweite Isolationsmaterial eingebettet sind. Damit der zweite Isolationskörper leicht gelöst werden kann werden die Fasern oder das Gewebe vorzugsweise langgestreckt oder lagenweise mit dem zweiten Isolationsmaterial am dritten Anschlussbereich aufgetragen. Dem zweiten Isolationsmaterial kann auch ein Füllmaterial beigegeben werden, das Hohlräume aufweist und die Auftrennung ebenfalls erleichtert.

Im zweiten Isolationskörper werden vorzugsweise Sollbruchstellen oder Sollbruchlinien vorgesehen, die durch Materialschwächungen im zweiten Isolationskörper gebildet werden. Sollbruchstellen können z.B. anhand des zugegebenen Füllmaterials oder des eingesetzten Gewebes realisiert werden.

Vorzugsweise wird vorgesehen, dass sich das zweite Isolationsmaterial nicht mit den Leitungsstäben verbindet. Die Leitungsstäbe werden z.B. mit einer Folie, z.B. eine Plastikfolie, umwickelt bevor das zweite Isolationsmaterial aufgetragen wird. Nach dem Auftrennen des zweiten Isolationskörpers sind die Leitungsstäbe sauber und können ohne zusätzliche Reinigung kontaktiert werden.

Der zweite Isolationskörper wird vorzugsweise von einer Hülle, gegebenenfalls eine Folie oder einer Verschalung umschlossen. Dies ist vorteilhaft, falls das zweite Isolationsmaterial eines besonderen Schutzes z.B. gegen die Einwirkung von Licht oder Chemikalien bedarf.

Damit der zweite Isolationskörper innerhalb der Stromschiene verankert werden kann, werden die Teile des ersten Isolationskörpers angrenzend an den dritten Anschlussbereich mit wenigstens einem Ankerelement versehen, das formschlüssig mit dem zweiten Isolationskörper zusammenwirkt.

Das erfindungsgemässe Energieverteilsystem umfasst mehrere miteinander verbundene Stromschienen, von denen wenigstens eine erfindungsgemäss als Ankopplungsschiene ausgebildet ist.

Nachfolgend wird die Erfindung anhand von Zeichnungen näher erläutert. Dabei zeigt:
- Fig. 1: eine erfindungsgemässe Stromschiene 1 bzw. Ankopplungsschiene mit fünf Leitungsstäben 11, deren Enden in einem ersten und einem zweiten Anschlussbereich A, B frei liegen, und die dazwischen in voneinander getrennte Teile eines mehrteiligen ersten Isolationskörpers 10 und eines mehrteiligen zweiten Isolationskörpers 4 eingebettet sind, von denen die Teile des zweiten Isolationskörpers 4 wahlweise lösbar sind, um je einen dritten Anschlussbereich C der Leitungsstäbe 11 freizulegen;
- Fig. 2: ein erfindungsgemässes Energieverteilsystem 100 für die Energieverteilung in einem Gebäude 8 mit mehreren in einem Leitungsschacht 80 angeordneten Ankopplungsschienen 1A, 1B, 1C und 1D, die dritte Anschlussbereiche C aufweisen, an die Anschlussschienen 1X angeschlossen sind, die durch eine Schachtwand 82 zu einem Stromverteiler 21, 22, 23, 24 in einer Gebäudeetage 831, 832, 833, 834 hinein geführt sind, in denen Stromabnehmern 51, 52, 53, 54 arbeiten;
- Fig. 3a: eine andere Ausgestaltung des Energieverteilsystems 100 im Gebäude 8 von Fig. 2 mit einer Stromschiene 1A im Leitungsschacht 80, die eine Verzweigung 1A2 aufweist, die durch eine Öffnung 820 in der Schachtwand 82 in die zweite Etage 832 hineingeführt ist;
- Fig. 3b: das Energieverteilsystem 100 von Fig. 3a mit einer ersten Anschlussschiene 1X, die an einen dritten Anschlussbereich C der zweiten Ankopplungsschiene 1C angeschlossen wird und einer zweiten Anschlussschiene 1Y, die an eine Verbindungsstelle 9A zwischen der Verzweigung 1A2 der Stromschiene 1A und der ersten Ankopplungsschiene 1B angeschlossen wird;
- Fig. 4a: einen Teil der Ankopplungsschiene 1C von Fig. 3a während der Freilegung des dritten Anschlussbereichs C;
- Fig. 4b: die Ankopplungsschiene 1C von Fig. 4a nach der Freilegung des dritten Anschlussbereichs C und dem Anschluss der Anschlussschiene 1X;
- Fig. 4c: die Ankopplungsschiene 1C von Fig. 4b nach der Erstellung einer Verbindung 91 zwischen der Anschlussschiene 1X und dem dritten Anschlussbereich C, der abschliessend wieder eingegossen wurde; und
- Fig. 5: einen Teil der Ankopplungsschiene 1C, die entlang der in Fig. 4b eingezeichneten Schnittlinie A-A aufgetrennt wurde;
- Fig. 6a: einen Teil des Energieverteilsystems 100 von Fig. 3a mit der Ankopplungsschiene 1A im Leitungsschacht 80, die einen mit einem zweiten Isolationsmaterial 4 gefüllten dritten Anschlussbereich C aufweist; und
- Fig. 6b: die Ankopplungsschiene 1A mit einem daran angeschlossenen Leistungsschalter LS.

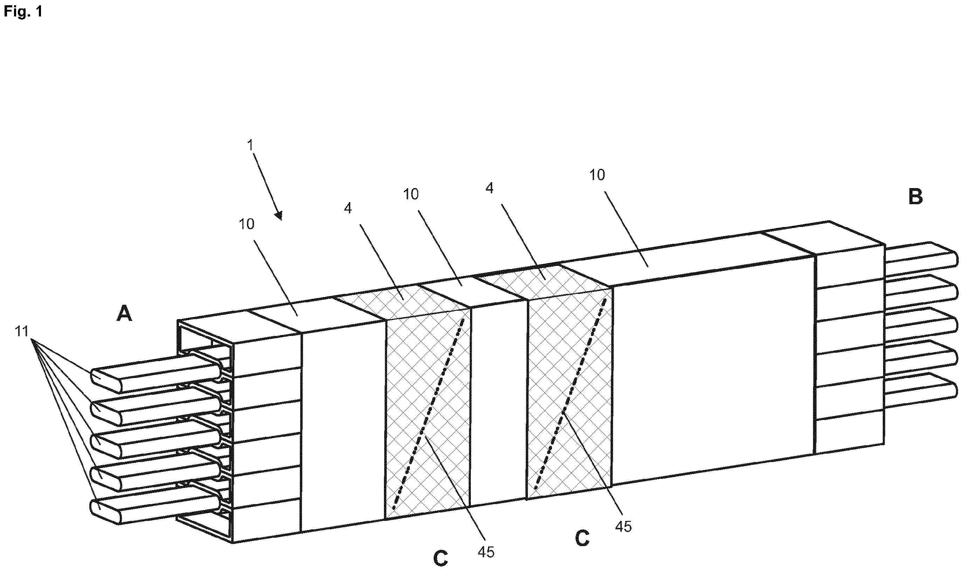

Fig. 1 zeigt eine erfindungsgemässe Stromschiene bzw. Ankopplungsschiene 1 exemplarisch mit fünf Leitungsstäben 11, deren entgegengesetzte Enden in einem ersten und einem zweiten Anschlussbereich A, B frei liegen, und die dazwischen in voneinander getrennte Teile eines mehrteiligen ersten Isolationskörpers 10 und eines mehrteiligen zweiten Isolationskörpers 4 eingebettet sind. Die Teile des ersten Isolationskörpers 10 bestehen aus einem konventionellen ersten Isolationsmaterial, wie Giessharz oder Polymerbeton. Die Teile des zweiten Isolationskörpers 4 sind wahlweise von der Ankopplungsschiene 1 lösbar und sind aus einem zweiten Isolationsmaterial gefertigt, welches nach Verfestigung durch mechanische Einwirkungen, wie Schlagen oder Schneiden, gelöst und entfernt werden kann. Der erste Isolationskörper 10 und der zweite Isolationskörper 4 weisen daher unterschiedliche Festigkeitseigenschaften auf, gemäss denen, der erste Isolationskörper 10 kaum zerstörbar ist und der zweite Isolationskörper 4 mit entsprechendem Werkzeug gelöst werden kann.

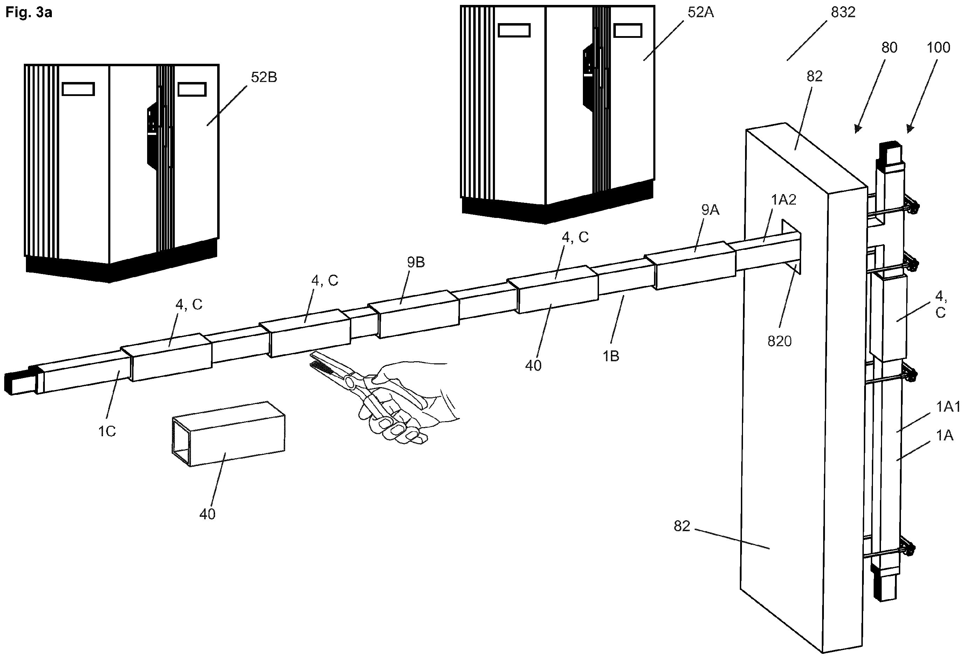

Geeignete Materialien für den ersten und den zweiten Isolationskörper 10, 4 sind oben beschrieben. Für den zweiten Isolationskörper 4 kann sprödes Material, z.B. Material mit der Konsistenz von Zement oder Gips, verwendet werden, das anhand eines Werkzeugs durch Schlagwirkung oder Vibration gelöst werden kann. Ferner kann gummielastisches Material verwendet werden, das durch Aufschneiden aufgetrennt und abgelöst werden kann. Das Material kann auch durch Bohren oder Fräsen aufgetrennt werden. Es stehen daher zahlreiche Materialien zur Verfügung, um einen geeigneten zweiten Isolationskörper 4 zu fertigen. Die Materialpalette kann zudem erweitert werden, wenn der zweite Isolationskörper 4 mittels einer Folie oder einer Abdeckung oder Verschalung zusätzlich gegen mechanische oder chemische Einwirkungen geschützt wird. Sofern der zweite Isolationskörper 4 schlagempfindlich ist, so kann er durch eine Verschalung 40 z.B. aus Metall oder Kunststoff geschützt werden (siehe Fig. 3a).

In Fig. 1 sind Solltrennlinien 45 eingezeichnet, entlang denen die Teile des zweiten Isolationskörpers 4 leicht aufgetrennt werden können. Sprödes Material wird vorzugsweise mittels vibrierenden Klingen aufgetrennt. Z.B. wird ein Handwerkzeug verwendet, welches frontseitig eine Klinge hält, die in Schwingung versetzt werden kann. Z.B. wird ein Werkzeugsystem, z.B. Fein Multimaster FFM 350 Q , der FEIN Suisse AG, CH-8953 Dietikon, verwendet, welches erlaubt, eine Vielzahl von Materialien, wie Holz, Kunststoff, Zement, Gips, etc., aufzutrennen. Mit einem handlichen Werkzeug kann die Ankopplungsschiene 1 somit selbst in engen Räumlichkeiten bequem bearbeitet werden, um den dritten Anschlussbereich C oder einen der dritten Anschlussbereiche C einer Ankopplungsschiene 1 freizulegen.

Für den Anschluss eines Anschlusskabels oder einer Anschlussschiene kann vorteilhaft dieselbe Verbindungsvorrichtung bzw. Kupplungsgarnitur verwendet werden, wie für den Anschluss in den Anschlussbereichen A und B. Die Bereitstellung unterschiedlicher Anschlussgarnituren kann daher vorteilhaft vermieden werden.

Nach dem Anschluss eines Anschlusskabels oder einer Anschlussschiene wird die resultierende Verbindungsstelle wieder vergossen, wobei das eingesetzte Isolationsmaterial vorzugsweise dem ersten Isolationsmaterial, falls eine Öffnung der Verbindung nicht mehr beabsichtigt ist, oder dem zweiten Isolationsmaterial entspricht, falls eine Öffnung möglich sein soll. Materialien, die als erstes oder zweites Isolationsmaterial verwendbar sind, wurden oben genannt. Zur Wiederherstellung des zweiten Isolationskörpers 4' kann nebst dem ersten oder zweiten Isolationsmaterial auch ein drittes Isolationsmaterial verwendet werden, welches andere Eigenschaften aufweist. Z.B. wird ein Isolationsmaterial eingesetzt, welches schneller aushärtet, als die ersten beiden Isolationsmaterialien.

Ein erfindungsgemässes Energieverteilsystem umfasst üblicherweise Stammleitungen, die z.B. in einem Leitungsschacht zu den Etagen eines Gebäudes geführt werden, und Zweigleitungen, die z.B. auf den Gebäudeetagen zu den Stromabnehmern geführt werden. Erfindungsgemässe Ankopplungsschienen können in den Stammleitungen und in den Zweigleitungen, d.h. in der Grobverteilung und Feinverteilung des Energieverteilsystems eingesetzt werden. Ankopplungsschienen können daher eingangsseitig mit dem Stromversorgungsnetz und ausgangsseitig mit einem Stromverbraucher verbunden und durch Ankopplungsschienen und/oder konventionelle Stromschienen miteinander verbunden werden.

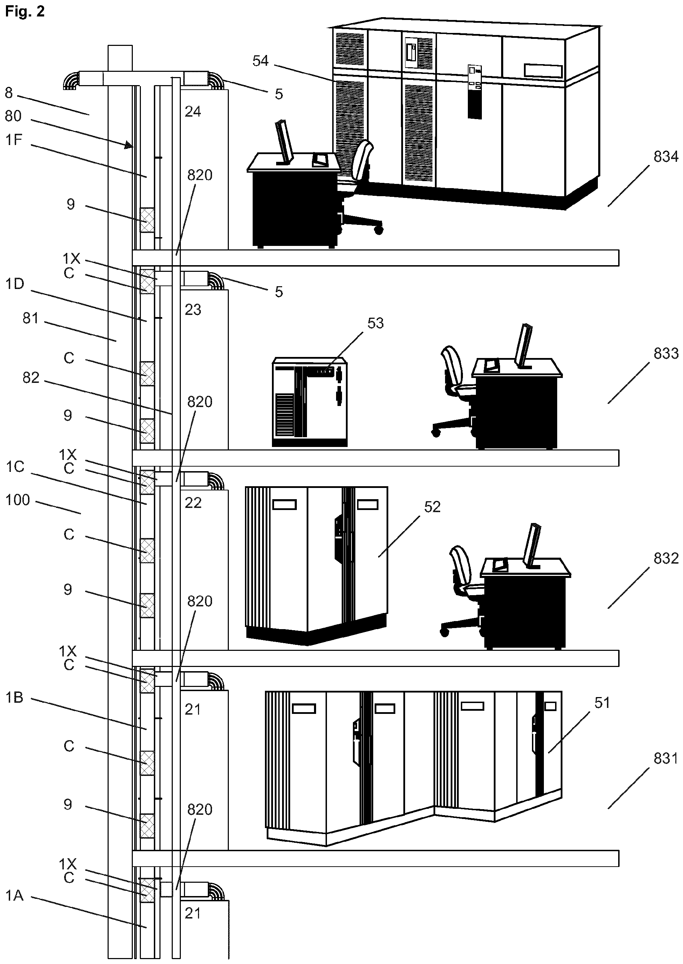

Fig. 2 zeigt ein erfindungsgemässes Energieverteilsystem 100 für die Energieverteilung in einem Gebäude 8. Die Stammleitung des Energieverteilsystems 100, die mehrere Ankopplungsschienen 1A, 1B, 1C und 1D umfasst, verläuft in einem Leitungsschacht 80, der durch Aussenmauern 81 und eine innere Schachtwand 82 begrenzt ist. Die Ankopplungsschienen 1A, ..., 1D weisen je zwei dritte Anschlussbereiche C auf, an die Anschlusskabel oder Anschlussschienen 1X anschliessbar sind. Je einer der dritten Anschlussbereiche C der Ankopplungsschienen 1A, ..., 1D, deren erste und zweite Anschlussbereiche A, B an Kopplungsstellen 9 miteinander verbunden sind, ist mit einer Ankopplungsschiene 1X verbunden, die durch eine Öffnung 820 in der Schachtwand 82 in eine zugeordnete Gebäudeetage 831, ..., 834 geführt ist. Die Ankopplungsschienen 1X weisen einen Abschlusskopf 5 auf, von dem ein Anschlusskabel zu einem Stromverteiler oder zu einem Leistungsschalter 21, 22, 23, 24 geführt ist, an den Stromabnehmer 51, 52, 53, 54 bzw. Datenverarbeitungsanlagen angeschlossen sind.

Für das vorliegende Gebäude 8 werden vorzugsweise Ankopplungsschienen 1A, ...,1D mit Abmessungen eingesetzt, die an die Höhe der einzelnen Etagen angepasst ist. Die Länge der Ankopplungsschienen 1A, ...,1D wird z.B. entsprechend der Höhe der Etagen 831, ..., 834 gewählt. Die Positionen der dritten Anschlussbereiche C sind vorzugsweise standardisiert. Ein Bauherr kann die Dimensionen der Ankopplungsschienen 1A, ...,1D und die Positionen der dritten Anschlussbereiche C bei einer Bestellung auch vorgegeben. Ein besonderer Vorteil der erfindungsgemässen Ankopplungsschienen 1A, ...,1D ist nämlich, dass diese mit minimalem Aufwand entsprechend den Wünschen eines Kunden gefertigt werden können. Grundsätzlich müssen nur die Anzahl und die Dimensionen der Teile der mehrteiligen ersten und zweiten Isolationskörper 10, 4 spezifiziert werden. Selbst eine automatisierte Fertigung der Ankopplungsschienen ist leicht durchführbar. Die vom Kunden gewünschten Spezifikationen der Ankopplungsschienen werden in einem Steuerrechner eingegeben, wonach ein Automat Trennscheiben in eine mit Leitungsstäben versehene Gussform an Positionen einsetzt, an denen Teile der ersten und zweiten Isolationskörper 10, 4 angrenzen werden. In der Folge wird eine Abgabevorrichtung aktiviert, die über einen steuerbaren Kanal erstes oder zweites Isolationsmaterial mit einem Volumen in die Gussform zwischen je zwei Trennscheiben einfüllt, welches entsprechend dem Querschnitt der Gussform und dem Abstand zwischen den Trennscheiben bereitgestellt wird. Nach Eingiessen der ersten und zweiten Isolationsmaterialen werden die Trennscheiben entfernt, sodass sich die Teile der Isolationskörper 10, 4 miteinander verbinden können. Durch Kanäle in den Trennscheiben kann ferner ein Klebstoff in die Trennzone eingeführt werden, welcher sich mit beiden Isolationsmaterialien verbinden kann.

Auf diese Weise können sequenziell unterschiedliche Ankopplungsschienen automatisch gefertigt werden.

Die Anzahl der dritten Anschlussbereiche C wird entsprechend der Erwartung zukünftig benötigter Anschlüsse gewählt. Ferner kann durch zwei oder mehrere dritte Anschlussbereiche C ein Freiheitsgrad vorgegeben werden, der es dem Installateur erlaubt, den jeweils bevorzugten dritten Anschlussbereich C zu wählen.

Fig. 2 zeigt ein Energieverteilsystem 100, bei dem die Energieverteilung über Stromschienen bzw. Ankopplungsschienen 1 angrenzend an den Leitungsschacht 80 innerhalb der Gebäudeetagen 831, ..., 834 endet. In einem grossflächigen Gebäude 8 können jedoch auch zahlreiche Stromverbraucher, z.B. Datenverarbeitungsanlagen, auf einer einzigen Etage 832 vorgesehen sein, denen Energie über Stromschienen zugeführt werden soll. Bei diesen Energieverteilsystem 100 ist die Verwendung erfindungsgemässer Ankopplungsschienen besonders vorteilhaft. Bekanntlich werden in Firmen, die Datenverarbeitungsanlagen einsetzen, Datenverarbeitungsgeräte regelmässig ersetzt oder ergänzt, weshalb ein flexibles Energieverteilsystem 100 mit erfindungsgemässen Ankopplungsschienen besondere Vorteile bietet.

Fig. 3a zeigt eine Ausgestaltung des Energieverteilsystems 100 im Gebäude 8 von Fig. 2 mit einer Stromschiene 1A im Leitungsschacht 80, die ein Stammleitungsteil 1A1 und eine Verzweigung 1A2 aufweist, die durch eine Öffnung 820 in der Schachtwand 82 in die zweite Etage 832 hineingeführt und dort über erfindungsgemässe Ankopplungsschienen 1B, 1C mit Anschlussschienen 1X, 1Y verbunden wird. Die erste Ankopplungsschiene 1B, die nur einen dritten Anschlussbereich C aufweist, ist über eine erste Verbindung 9A mit der Verzweigung 1A2 der Stromschiene 1A und über eine zweite Verbindung 9B mit der zweiten Ankopplungsschienen 1C verbunden, die zwei dritte Anschlussbereiche C aufweist. Über die erste und die zweite Ankopplungsschiene 1B, 1C sollen Datenverarbeitungsanlagen 52A, 52B mit Strom versorgt werden. Die Datenverarbeitungsanlage 52B soll über eine erste Anschlussschiene mit einem der dritten Anschlussbereiche C der zweiten Ankopplungsschiene 1C, der für die Ankopplung ideal liegt, verbunden werden. Die Datenverarbeitungsanlage 52A soll über eine zweite Anschlussschiene an die Verbindungsstelle 9A zwischen der ersten und der zweiten Ankopplungsschiene 1B, 1C angeschlossen werden. Diese Konfiguration wurde gewählt, um exemplarisch zu zeigen, dass die Ankopplung der beiden Anschlussschienen in einem dritten Anschlussbereich C und an einer konventionellen Verbindungsstelle 9 vorteilhaft in gleicher Weise und mit gleichen Mitteln erfolgen kann.

Eine Hand mit einem Werkzeug symbolisiert, dass der betreffende dritte Anschlussbereich C der zweiten Ankopplungsschiene 1C zuerst freigelegt werden muss. Der Anschluss der zweiten Anschlussschiene 1Y erfolgt vorzugsweise gleichzeitig mit der Verbindung der ersten Ankopplungsschiene 1B mit der Stromschiene 1A.

Fig. 3a zeigt ferner, dass die dritten Kopplungsbereiche C und/oder die Verbindungsstellen 9 vorzugsweise mit einer Verschalung 40 abgedeckt werden.

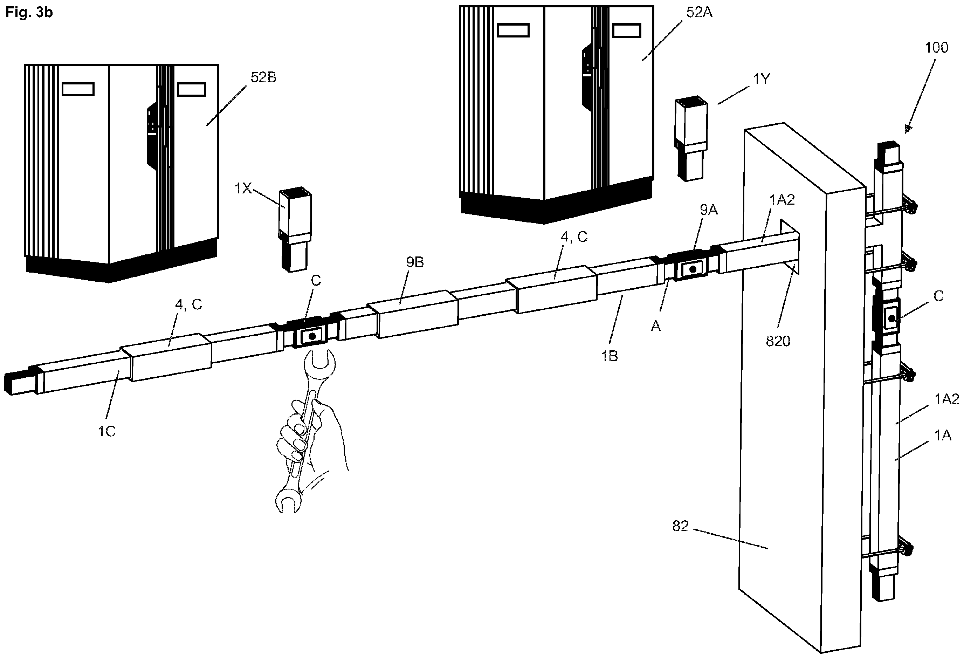

Fig. 3b zeigt das Energieverteilsystem 100 von Fig. 3a mit der ersten Anschlussschiene 1X, die an den freigelegten dritten Anschlussbereich C der zweiten Ankopplungsschiene 1C angeschlossen wird. Ferner ist die zweite Anschlussschiene 1Y gezeigt, die an die Verbindungsstelle 9A zwischen der Verzweigung 1A2 der Stromschiene 1A und der ersten Ankopplungsschiene 1B angeschlossen wird.

Die Hand mit einem Schraubenschlüssel symbolisiert, dass die Leitungsstäbe 11 der Ankopplungsschienen 1B, 1C und die Leitungsstäbe 11 der Anschlussschienen 1X, 1Y stabil miteinander verschraubt werden, wodurch grosse stabile Kontaktflächen resultieren. Über das gesamte Energieverteilsystem 100 von der Stromquelle bis zu den Verbrauchern wird daher eine optimale Verbindungsqualität erreicht.

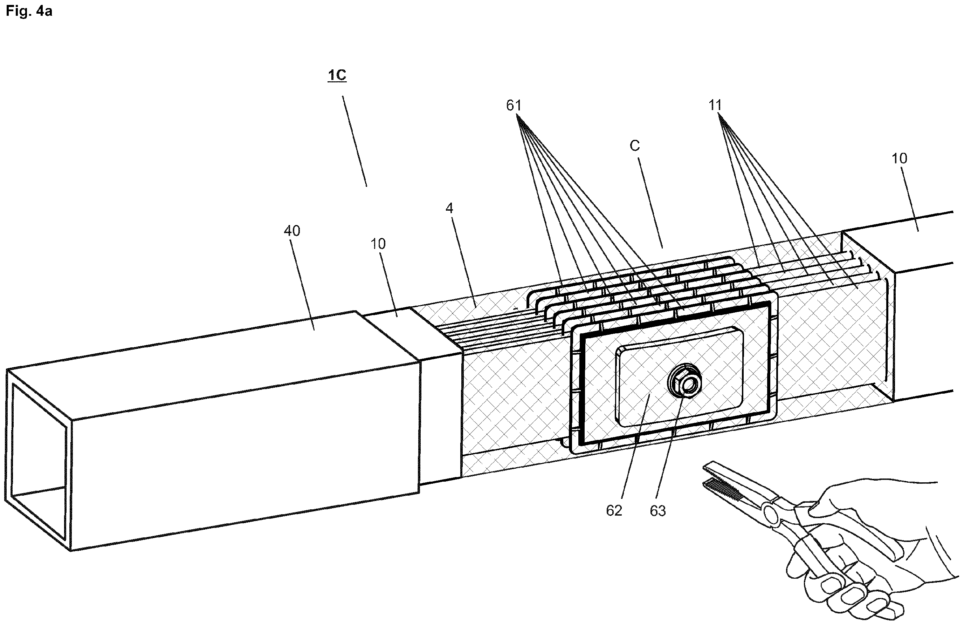

Fig. 4a zeigt einen Teil der Ankopplungsschiene 1C von Fig. 3a während der Freilegung des dritten Anschlussbereichs C. Der zweite Isolationskörper 4, der zwischen zwei Teilen des ersten Isolationskörpers 10 eingeschlossen ist und der den dritten Anschlussbereich C umschliesst, wird entfernt. Die Verschalung 40 wurde zur Seite geschoben. Der zweite Isolationskörper 4 wird, wie oben beschrieben, durch mechanische Einwirkung von den Leitungsstäben 11 gelöst.

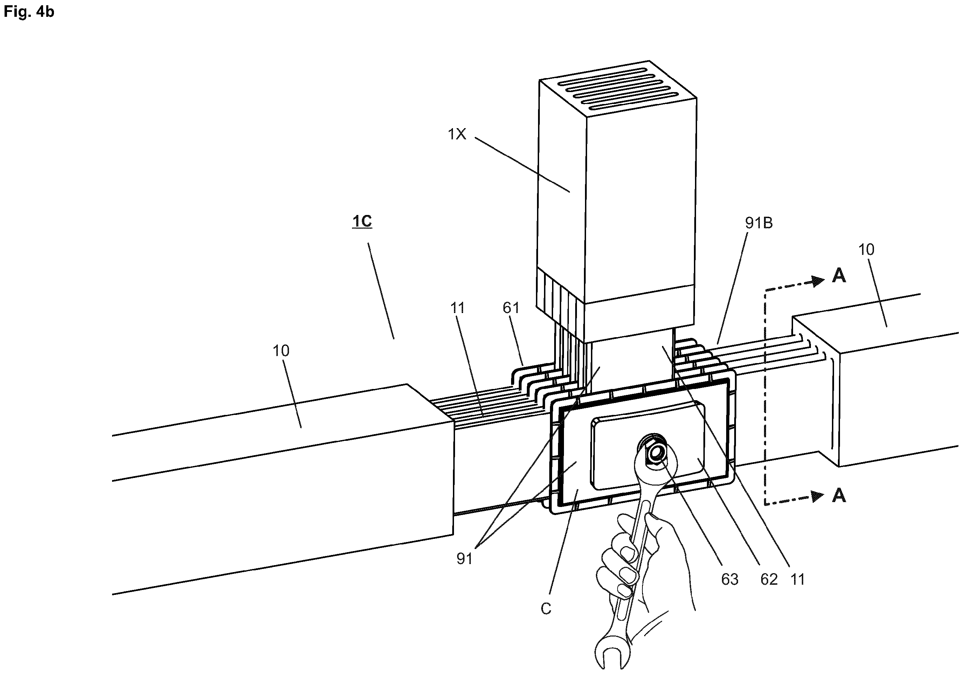

Fig. 4b zeigt die Ankopplungsschiene 1C von Fig. 4a nach der Freilegung des dritten Anschlussbereichs C bzw. der Leitungsstäbe 11 und dem Anschluss der Anschlussschiene 1X mittels einer Kopplungsgarnitur, die vorzugsweise isolierende Kopplungsplatten 61, federelastische Andruckplatten 62 und eine Schraubengarnitur 63 umfasst. Zur Durchführung einer Kopplungsschraube können die Leitungsstäbe 11 mit Bohrungen versehen sein.

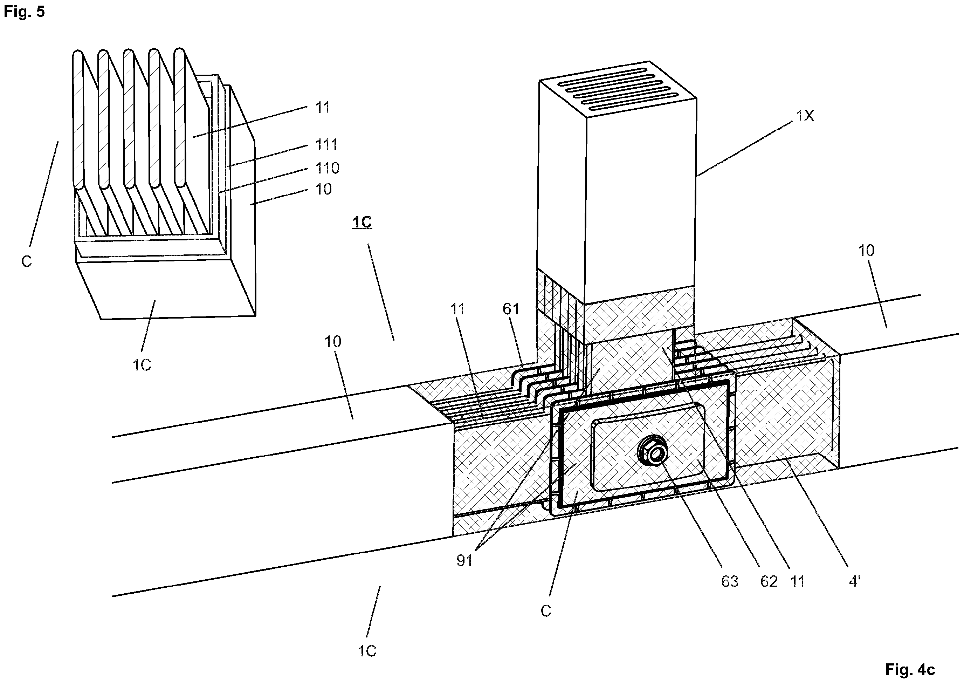

Fig. 4c zeigt die Ankopplungsschiene 1C von Fig. 4b nach der Erstellung einer Verbindung 91 zwischen der Anschlussschiene 1X und dem dritten Anschlussbereich C, der abschliessend wieder eingegossen wurde. Z.B. werden Teile der Verschalung 40 gelöst und die verbliebenen Teile der Verschalung zu einer Gussform zusammengesetzt, die mit dem ersten, zweiten oder einem dritten Isolationsmaterial gefüllt. Nach Fertigstellung des Energieverteilsystems 100 resultiert somit ein weitgehend homogenes Stromschienennetz.

Fig. 5 zeigt einen Teil der Ankopplungsschiene 1C, die nach Entfernen des zweiten Isolationskörpers 4 entlang der in Fig. 4b eingezeichneten Schnittlinie A-A aufgetrennt wurde. Ein dem dritten Anschlussbereich C zugewandter Teil des ersten Isolationskörpers 10 ist mit einem rechteckförmigen Flansch 110 versehen, der einen Aussenrand 111 aufweist. Das der Fertigung des zweiten Isolationskörpers 4 dienende zweite Isolationsmaterial kann in den Flansch 110 eingefüllt werden und bildet mit diesem nach der Verfestigung eine formschlüssige Verbindung. Eine Verschalung kann in der Folge über den zweiten Isolationskörper 4 geschoben und im Aussenrand 111 verankert werden. Der Flansch 110 wirkt als Ankerelement und hält den schwächeren zweiten Isolationskörper 4 bei mechanischen Einwirkungen in Position.

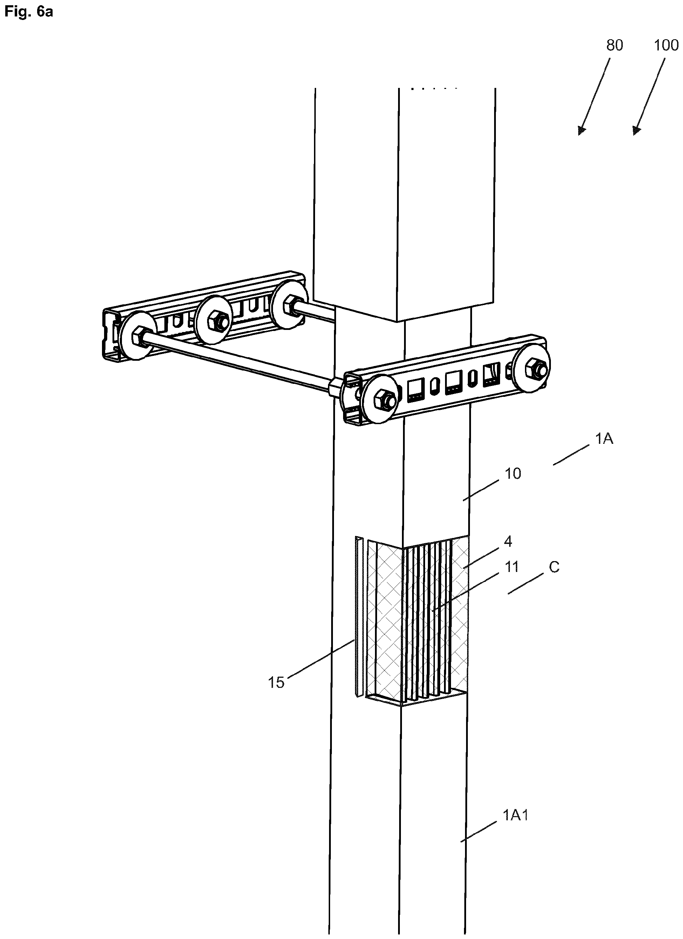

Fig. 6a zeigt einen Teil des Energieverteilsystems 100 von Fig. 3a mit der Ankopplungsschiene 1A im Leitungsschacht 80, die wenigstens einen dritten Anschlussbereich C aufweist, der mit einem zweiten Isolationsmaterial gefüllt ist, welches ein zweiten Isolationskörper 4 bildet. Die Ankopplungsschiene 1A erfüllt vollumfänglich die Funktion einer konventionellen Stromschiene, die an beiden Enden einen Anschlussbereich A und B aufweist. Das zweite Isolationsmaterial bzw. der zweite Isolationskörper 4 ist transparent gezeigt, kann aber in jeder beliebigen Farbe, vorzugsweise der Farbe des ersten Isolationskörpers 10 vorgesehen werden. Der zweite Isolationskörper 4 umschliesst die Leitungsstäbe 11 nur teilweise bzw. nur soweit, wie dies für die Verbindung mit einer Anschlussvorrichtung, einer Anschlussschiene 1X, eines Leistungsschalters, Kontakten eines Anschlusskabels oder einem Anschlusskasten, der vorteilhaft dimensioniert werden kann.

Es ist ersichtlich, dass der dritte Anschlussbereich C derart dimensioniert ist, dass grosse Kontaktflächen an den Leitungsstäben 11 freigelegt werden können. Qualitativ hochwertige Verbindungen können daher bereits durch Steck- oder Klemmverbindungen realisiert werden. Ferner können auch geschraubte Verbindungen realisiert werden.

Der erste Isolationskörper 10 kann mit der darin vorgesehenen Ausnehmung und Ausformungen vorteilhaft an die Anschlussvorrichtung angepasst werden. Gezeigt ist eine Halterippe 15, an der z.B. das Gehäuse eines Leistungsschalters eingerastet werden kann. Z.B. wird zuerst die elektrische Vorrichtung den Leitungsstäben 11 verbunden und anschliessend das Gehäuse aufgesetzt und in der Halterippe 15 eingerastet. Abschliessend, sofern dies erwünscht ist, kann das Gehäuse mit dem ersten Isolationskörper 10 vergossen werden. Wie oben beschrieben wurde, kann auch der gesamte dritte Anschlussbereich C ausgegossen werden.

Dieses Ausführungsbeispiel zeigt exemplarisch, dass der dritte Anschlussbereich C beliebig ausgestaltet werden kann, sodass beliebige Anschlussvorrichtungen anschliessbar sind und im ersten Isolationskörper 10 vorteilhaft verankert werden können. Der erste Isolationskörper 10 kann dabei in zwei oder mehrere vollständig voneinander getrennte Teile aufgetrennt und/oder mit Ausnehmungen versehen werden, wie sie in Fig. 6a gezeigt sind.

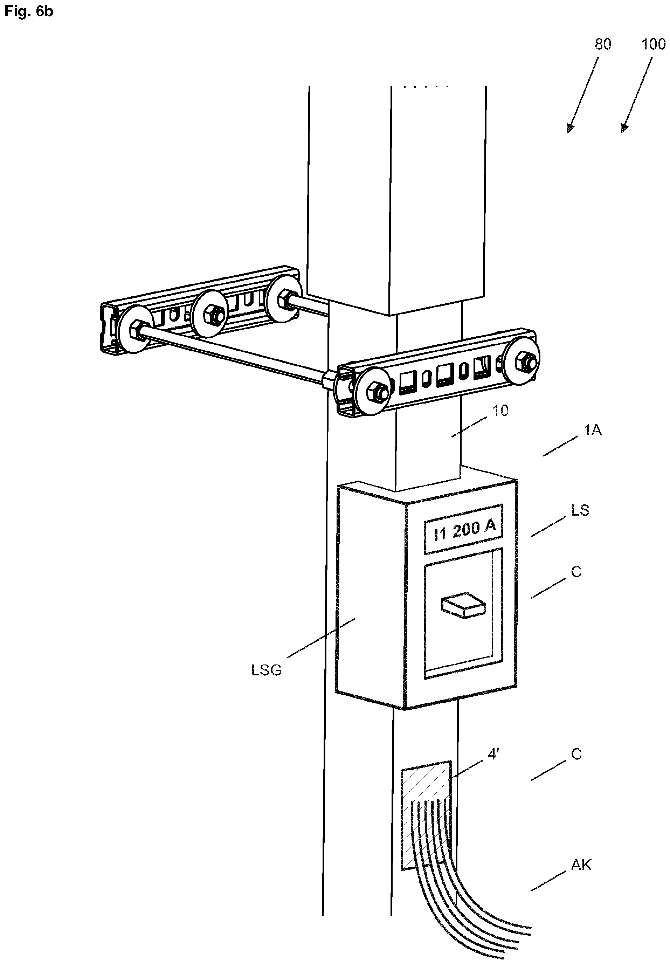

Fig. 6b zeigt die Ankopplungsschiene 1A mit einem daran angeschlossenen Leistungsschalter LS, dessen Gehäuse LSG die Ankopplungsschiene 1A bzw. den ersten Isolationskörper 10 teilweise umschliesst und von der Halterippe 15 gehalten ist. Anschlussvorrichtungen können hingegen auch nur auf einer Seite der Ankopplungsschiene 1A angeordnet und gegebenenfalls in den ersten Isolationskörper 10 eingesenkt sein.

Exemplarisch ist in Fig. 6b ein weiterer dritter Anschlussbereich C gezeigt, in dem nach Entfernung des zweiten Isolationskörpers 4 die Anschlusskontakte von drei Anschlusskabeln AK mit den Leitungsstäben 11 verbunden und anschliessend durch ein drittes Isolationsmaterial eingegossen wurden.

### Literaturverzeichnis

[1] Produktkatalog "Niederspannungs-Schienenverteiler LANZ HE 2.5.2" der LANZ OENSINGEN AG vom September 2009
[2] E-LINE MK Busbar Systems 100-160-225A, www.eae.com.tr

## Patentansprüche

1. Stromschiene (1C) mit mehreren elektrisch leitfähigen Leitungsstäben (11), die getrennt voneinander von einem ersten Anschlussbereich (A) an einem Ende der Stromschiene (1) zu einem zweiten Anschlussbereich (B) am anderen Ende der Stromschiene (1) geführt und in einem ersten Isolationskörper (10) aus einem ersten Isolationsmaterial, wie Giessharz oder Polymerbeton, eingegossen sind, wobei zur optionalen Ankopplung einer Anschlussvorrichtung zwischen dem ersten und dem zweiten Anschlussbereich (A, B) der Stromschiene (1) wenigstens ein dritter Anschlussbereich (C) vorgesehen ist, **dadurch gekennzeichnet, dass** innerhalb des dritten Anschlussbereichs der erste Isolationskörper (10) zumindest teilweise unterbrochen ist oder eine Ausnehmung aufweist und durch den zumindest ein Teil der Leitungsstäbe (11) hindurch geführt ist, die im dritten Anschlussbereich (C) von einem lösbaren zweiten Isolationskörper (4) zumindest teilweise umschlossen sind, der aus einem zweiten Isolationsmaterial besteht, dessen Festigkeit sich von der Festigkeit des ersten Isolationsmaterials unterscheidet.

2. Stromschiene (1) nach Anspruch 1, **dadurch gekennzeichnet, dass** das zweite Isolationsmaterial eine aus einer oder mehreren Komponenten bestehende organische oder anorganische Masse ist, die sich nach der Anwendung selbsttätig oder vorzugsweise unter Zufuhr von Wärme oder eines Reaktanten oder Katalysators verfestigt und deren Wärmeleitfähigkeit vorzugsweise zumindest annähernd der Wärmeleitfähigkeit des ersten Isolationsmaterials entspricht.

3. Stromschiene (1) nach Anspruch 1 oder 2, **dadurch gekennzeichnet, dass** das zweite Isolationsmaterial zumindest teilweise einen organischen Polymer, wie Thermoplaste, Duromere oder Elastomere oder einen anorganischen Polymer, wie einen Silikonpolymer, Silikonkautschuk, Polysiloxane, Polyphosphazene oder Polysilazane umfasst oder aus diesem besteht.

4. Stromschiene (1) nach einem der Ansprüche 1-3, **dadurch gekennzeichnet, dass** das verfestigte zweite Isolationsmaterial weich und gummielastisch oder hart und spröde ist und/oder dass der zweite Isolationskörper (4) derart ausgebildet ist, dass er durch thermische oder mechanische Einwirkung, wie Schneiden, Schlagen oder Vibrationen auftrennbar ist.

5. Stromschiene (1) nach einem der Ansprüche 1-4, **dadurch gekennzeichnet, dass** der zweite Isolationskörper (4) von wenigstens einer Hülle, gegebenenfalls eine Folie oder einer Verschalung (40) umschlossen ist.

6. Stromschiene (1) nach einem der Ansprüche 1-5, **dadurch gekennzeichnet, dass** der zweite Isolationskörper (4) Sollbruchstellen oder Sollbruchlinien aufweist, die durch Schwächungen im zweiten Isolationskörper (4) gebildet werden.

7. Stromschiene (1) nach einem der Ansprüche 1-6, **dadurch gekennzeichnet, dass** der dritte Anschlussbereich (C) eine Zugangsöffnung oder Ausnehmung an einer Seite des ersten Isolationskörpers (10) bildet, oder dass der dritte Anschlussbereich (C) eine Zugangsöffnung oder Ausnehmung an zwei, drei oder allen Seiten des Isolationskörpers (10) bildet.

8. Stromschiene (1) nach einem der Ansprüche 1-7, **dadurch gekennzeichnet, dass** der wenigstens eine dritte Anschlussbereich (C) mit einer Anschlussvorrichtung, wie
a) einer vorzugsweise als Anschlussschiene dienenden Stromschiene (1X); oder
b) einem Leistungsschalter (LS); oder
c) Anschlüssen eines Anschlusskabels (AK); oder
d) einem Anschlusskasten;
verbunden und vorzugsweise mit einem dritten Isolationsmaterial (4') vergossen ist.

9. Stromschiene (1) nach einem der Ansprüche 1-8, **dadurch gekennzeichnet, dass** der einteilige oder mehrteilige erste Isolationskörper (10) angrenzend an den dritten Anschlussbereich (C) wenigstens ein Ankerelement (110) aufweist, das formschlüssig mit dem zweiten Isolationskörper (4) zusammenwirkt, und/oder dass der einteilige oder mehrteilige erste Isolationskörper (10) angrenzend an den dritten Anschlussbereich (C) wenigstens ein Halteelement (15) aufweist, das formschlüssig mit einer installierten Anschlussvorrichtung zusammenwirken kann.

10. Energieverteilsystem (100) mit mehreren Stromschienen (1), von denen wenigstens eine gemäss einem der Ansprüche 1-9 ausgebildet ist und mit wenigstens einem dritten Anschlussbereich (C) eine Ankopplungsschiene (1C) bildet.

11. Energieverteilsystem (100) nach Anspruch 10, **dadurch gekennzeichnet, dass** der wenigstens eine dritte Anschlussbereich (C) der wenigstens einen Ankopplungsschiene (1C) mit einer Anschlussvorrichtung, wie
a) einer vorzugsweise als Anschlussschiene dienenden Stromschiene (1X); oder
b) einem Leistungsschalter (LS); oder
c) Anschlüssen eines Anschlusskabels (AK); oder
d) einem Anschlusskasten;
verbunden ist.

12. Energieverteilsystem (100) nach Anspruch 10 oder 11, **dadurch gekennzeichnet, dass** die Stromschienen (1) einschliesslich der wenigstens einen Ankopplungsschiene (1C) innerhalb eines Leitungsschachts (8) angeordnet sind, wobei der dritte Anschlussbereich (C) der wenigstens einen Ankopplungsschiene (1C) vorzugsweise mit einer Anschlussvorrichtung, wie einer Stromschiene (1X) oder mit Anschlüssen eines Kabels verbunden ist, die bzw. das durch eine Wand (82) des Leitungsschachts (8) nach aussen geführt ist.

13. Energieverteilsystem (100) nach Anspruch 10, 11 oder 12, **dadurch gekennzeichnet, dass** die Stromschienen (1) einschliesslich der wenigstens einen Ankopplungsschiene (1C) innerhalb einer Gebäudeetage (831, ..., 834) angeordnet sind, wobei der dritte Anschlussbereich (C) der wenigstens einen Ankopplungsschiene (1C) vorzugsweise mit einer Anschlussvorrichtung, wie einer Anschlussschiene (1X), Anschlüssen eines Kabels (AK) oder einem Leistungsschalter (LS) verbunden ist.

14. Energieverteilsystem (100) nach einem der Ansprüche 10-13, **dadurch gekennzeichnet, dass** im dritten Anschlussbereich (C) dieselben Kopplungsvorrichtungen verwendet werden, wie in den weiteren Anschlussbereichen (A, B)

15. Energieverteilsystem (100) nach einem der Ansprüche 10-14, **dadurch gekennzeichnet, dass** der wenigstens eine dritte Anschlussbereich (C) der wenigstens einen Ankopplungsschiene (1C), an den die Anschlussvorrichtung (1X, LS, AK) angeschlossen ist, ganz oder teilweise mit einem dritten Isolationsmaterial, vergossen ist, welches vorzugsweise dem ersten oder zweiten Isolationsmaterial entspricht.

## Claims

1. Busbar (1C) with a plurality of electrically conducting conductor bars (11), which extend separated from one another from a first terminal region (A) at one end of the busbar (1) to a second terminal region (B) at the other end of the busbar (1) and are cast in a first insulating body (10) made from a first insulating material, such as cast resin or polymer concrete, wherein for the optional coupling of a connection device between the first and the second terminal region (A, B) of the busbar (1) at least a third terminal region (C) is provided, **characterised in that** within the third terminal region (C) the first insulating body (10) is at least partially interrupted or provided with a recess and through which a portion of the conductor bars (11) extend, which in the third terminal region (C) are enclosed at least partially by a releasable second insulating body (4), which consists of a second insulating material, whose consistency deviates from the consistency of the first insulating material.

2. Busbar (1) according to claim 1, **characterised in that in that** the second insulating material is an organic or inorganic mass consisting of one or more components which, after application, solidifies automatically or preferably with the introduction of heat or a reactant or catalyst and whose heat conductivity preferably corresponds at least approximately to the thermal conductivity of the first insulating material.

3. Busbar (1) according to claim 1 or 2, **characterised in that** the second insulating material at least partially comprises or consists of an organic polymer such as thermoplastics, thermosets or elastomers or an inorganic polymer such as a silicone polymer, silicone rubber, polysiloxanes, polyphosphazenes or polysilazanes.

4. Busbar (1) according to one of the claims 1-3, **characterised in that** the solidified second insulation material is soft and elastic or hard and brittle and/or that the second insulation body (4) is designed such that it can be separated by thermal or mechanical action, such as cutting, hitting or vibrations.

5. Busbar (1) according to one of the claims 1-4, **characterised in that** the second insulating body (4) is enclosed by at least one sheath, optionally a foil or a casing (40).

6. Busbar (1) according to one of the claims 1-5, **characterised in that** the second insulation body (4) has predetermined breaking points or predetermined breaking lines which are formed by weakenings in the second insulation body (4).

7. Busbar (1) according to one of the claims 1-6, **characterised in that** the third connection region (C) forms an access opening or recess on one side of the first insulation body (10), or that the third connection region (C) forms an access opening or recess on two, three or all sides of the insulation body (10).

8. Busbar (1) according to one of the claims 1-7, **characterised in that** the at least one third connection region (C) is connected to a connection device, such as
a) a busbar (1X) preferably serving as a connecting rail; or
b) a circuit breaker (LS); or
c) connections of a connection cable (AK); or
d) a junction box;
and preferably is cast in a third insulating material (4').

9. Busbar (1) according to one of the claims 1-8, **characterised in that** the one-part or multi-part first insulation body (10) has at least one anchor element (110) adjacent to the third connection region (C), which interacts with the second insulation body (4) in a form-fitting manner, and/or **in that** the one-part or multi-part first insulation body (10) has adjacent to the third connection region (C) at least one holding element (15) which can cooperate form-fitting manner with an installed connection device.

10. Energy distribution system (100) with a plurality of busbars (1), of which at least one is designed according to any one of claims 1-9 and forms with at least one third connection region (C) a coupling rail (1C).

11. Energy distribution system (100) according to claim 10, **characterised in that** the at least one third connection region (C) of the at least one coupling rail (1C) is connected to a connection device, such as
a) a busbar (1X) preferably serving as a connecting rail; or
b) a circuit breaker (LS); or
c) connections of a connection cable (AK); or
d) a junction box.

12. Energy distribution system (100) according to claim 10 or 11, **characterised in that** the busbars (1) including the at least one coupling rail (1C) are arranged within a conduit duct (8), wherein the third connecting region (C) of the at least one coupling rail (1C) is preferably connected to a connection device such as a busbar (1X) or connected to terminals of a cable which connection device or cable is guided through a wall (82) of the duct (8) to the outside.

13. Energy distribution system (100) according to claim 10, 11 or 12, **characterised in that** the busbars (1) including the at least one coupling rail (1C) are arranged within a building floor (831, ..., 834), wherein the third connecting area (C) of the at least one coupling rail (1C) is preferably connected to a connecting device, such as a connecting rail (1X), connections of a cable (AK) or a circuit breaker (LS).

14. Energy distribution system (100) according to one of the claims 10-13, **characterised in that** the same coupling devices are used in the third connection region (C) as in the other connection regions (A, B).

15. Energy distribution system (100) according to one of the claims 10-14, **characterised in that** the at least one third connection region (C) of the at least one coupling rail (1C), to which the connection device (1X, LS, AK) is connected, is completely or partially encapsulated with a third insulation material, which preferably corresponds to the first or second insulation material.

## Revendications

1. Rail conducteur (1C) avec plusieurs barres électriquement conductrices (11), qui sont guidées séparées l'une de l'autre d'une première zone terminale (A) sur un bout du rail conducteur (1) vers une deuxième zone terminale (B) sur l'autre bout du rail conducteur (1) et encapsulées dans un premier corps isolant (10) réalisé en un premier matériel isolant, comme résine de coulée ou béton polymère, une troisième zone terminale (C) étant prévue pour l'accouplement optionnel d'un dispositif d'accouplement entre la première et la deuxième zone terminale (A, B) du rail conducteur (1) **caractérisé en ce que** à l'intérieur de la troisième zone terminale (C) le corps isolant (10) est au moins partiellement interrompu ou présente une cavité et à travers lequel au moins une partie des barres conductrices (11) sont guidées, qui sont au moins partiellement contournés dans la troisième zone terminale (C) d'un deuxième corps isolant amovible v (4), qui est formé d'un deuxième matériel isolant, dont la solidité est différente de la solidité du premier matériel isolant.

2. Rail conducteur (1) selon la revendication 1, **caractérisé en ce que** le deuxième matériel isolant est une masse organique ou inorganique comprenant une ou plusieurs composantes, qui se solidifie après l'application soi-même ou de préférence en appliquant de la chaleur ou d'un réactant ou d'un catalyseur et dont la conductivité de chaleur est de préférence au moins à peu près égale à la conductivité de chaleur du premier matériel isolant.

3. Rail conducteur (1) selon la revendication 1 ou 2, **caractérisé en ce que** le deuxième matériel isolant comprend ou est formé au moins partiellement d'un polymère organique, comme des thermoplastes, duromères ou élastomères ou d'un polymère inorganique comme un polymère de silicone, caoutchouc de silicone, polysiloxane, polyphosphazène ou polysilazane.

4. Rail conducteur (1) selon une des revendications 1-3, **caractérisé en ce que** le deuxième matériel isolant solidifié est mou et élastique ou dur et fragile et/ou que le deuxième corps isolant (4) est conçu de manière qu'il peut être séparé par influence thermique ou mécanique, comme la coupe, des coups ou des vibrations.

5. Rail conducteur (1) selon une des revendications 1-4, **caractérisé en ce que** le deuxième corps isolant (4) est encapsulé par ou moins une housse, éventuellement un film ou d'un coffrage (40).

6. Rail conducteur (1) selon une des revendications 1-5, **caractérisé en ce que** le deuxième corps d'isolation (4) présente des point de rupture ou des lignes de rupture, qui sont réalisés par des affaiblissements dans le deuxième corps isolant (4).

7. Rail conducteur (1) selon une des revendications 1-6, **caractérisé en ce que** la troisième zone terminale (C) forme une ouverture d'accès ou une cavité sur un côté du premier corps isolant (10), ou que la troisième zone terminale (C) forme une ouverture d'accès ou une cavité sur deux, trois ou tous les côtés du corps isolant (10).

8. Rail conducteur (1) selon une des revendications 1-7, **caractérisé en ce que** la au moins une troisième zone terminale (C) est connecté à un dispositif d'accouplement, comme
a) un rail conducteur (1X) servant de préférence comme rail de connexion; ou
b) un disjoncteur (LS); ou
c) des connexions d'un câble de connexion (AK); ou
d) une boîte de connexion;
et de préférence encapsulé dans un troisième matériel isolant (4').

9. Rail conducteur (1) selon une des revendications 1-8, **caractérisé en ce que** le premier corps isolant (10) conçu en une ou plusieurs pièces présente au voisinage de la troisième zone terminale (C) au moins un élément d'ancrage (110), qui interagit par verrouillage mécanique avec le deuxième corps isolant (4) et/ou que le premier corps isolant (10) conçu en une ou plusieurs pièces présente au voisinage de la troisième zone terminale (C) au moins un élément de fixation (15), qui peut interagir par verrouillage mécanique avec un dispositif de connexion installé.

10. Système de distribution d'énergie (100) avec plusieurs rails conducteurs (1), dont au moins un est conçu selon une des revendications 1-9 et forme avec au moins une troisième zone terminale (C) un rail d'accouplement (1C).

11. Système de distribution d'énergie (100) selon la revendication 10, **caractérisé en ce que** la au moins une troisième zone terminale (C) du au moins un rail d'accouplement (1C) est connecté à un dispositif d'accouplement, comme
a) un rail conducteur (1X) servant de préférence comme rail de connexion; ou
b) un disjoncteur (LS); ou
c) des connexions d'un câble de connexion (AK); ou
d) une boîte de connexion.

12. Système de distribution d'énergie (100) selon la revendication 10 ou 11, **caractérisé en ce que** le rail conducteur (1) inclus le au moins un rail d'accouplement (1C) sont arrangé à l'intérieur d'une gaine (8), la troisième zone terminale (C) du au moins un rail d'accouplement (1C) étant de préférence connectée avec un dispositif de connexion, comme un rail conducteur (1X) ou avec des connexions d'un câble, qui est resp. qui sont guidés à travers la paroi (82) de la gaine (8) vers l'extérieur.

13. Système de distribution d'énergie (100) selon la revendication 10, 11 ou 12, **caractérisé en ce que** les rails conducteurs (1) inclus le au moins un rail d'accouplement (1C) sont arrangé à l'intérieur d'un étage du bâtiment (831, ..., 834), la troisième zone terminale (C) du au moins un rail d'accouplement (1C) étant de préférence connectée avec un dispositif de connexion, comme un rail conducteur (1X), des connexions d'un câble (AK) ou un disjoncteur (LS).

14. Système de distribution d'énergie (100) selon une des revendications 10-13, **caractérisé en ce que** dans la troisième zone terminale (C) les mêmes dispositifs d'accouplement sont utilisés, comme dans les autres zones terminales (A, B)

15. Système de distribution d'énergie (100) selon une des revendications 10-14, **caractérisé en ce que** la au moins une troisième zone terminale (C) du au moins un rail d'accouplement (1C), auquel le dispositif d'accouplement (1X, LS, AK) est connecté, est entièrement ou partiellement encapsulé dans un troisième matériel isolant, qui correspond de préférence au premier ou au deuxième matériel isolant.
